# EUROPEAN PATENT APPLICATION

(11) **EP 0 824 076 A1**
(43) Date of publication of application: **18.02.1998**
(21) Application number: 96305953.0
(22) Date of filing: 14.08.1996
(51) Int. Cl.: B41M 5/00, G03C 1/795, G03G 7/00

(54) **Polymeric film with opaque substrate**

(71) Applicant: IMPERIAL CHEMICAL INDUSTRIES PLC, London SW1P 3JF (GB)
(72) Inventor: Francis, John, Yarm, Cleveland TS15 9RJ (GB); Rutter, Philip Mark, Guisborough, Cleveland TS14 6HY (GB)
(74) Representative: Humphries, Martyn

(57) **Abstract**

A polymeric film has an opaque substrate layer having an optical density greater than 2.0, and on at least one surface thereof a white outer layer. The substrate layer preferably contains carbon black. The film preferably has two white outer layers, and is particularly suitable for imaging on both surfaces thereof.

## Description

This invention relates to a polymeric film, and in particular to a white polymeric film which is suitable for imaging.

Polymeric, and particularly polyester, film has been used in a wide range of imaging applications. White polymeric film has been used, in some cases as an alternative to paper, for the application of photographic images, for writing on, in printing applications such as thermal and laser transfer printing, ink-jet printing, photocopying etc. Unfortunately, existing white polymeric films are of relatively low opacity such that some light can pass through the film and interfere with the viewing of any image applied thereon. This can be a particular problem when imaging of both sides of the white polymeric film is required, ie an image applied to one side of the film can frequently be seen through the other side of the film. Thus, known white polymeric films do not have the opacity required to enable images to be applied to both sides of the film without one image interfering with the other. The opacity of a film can be increased by increasing the concentration of the whitening or opacifying agent, ie filler, present in the film, or by increasing the thickness of the film. However, there are practical limits on how much filler can be incorporated into a film, and increasing film thickness will correspondingly increase the cost of the film and may make it unsuitable for the particular intended application.

Another problem associated with imaging both sides of white polymeric, particularly polyester, film is that the two surfaces of existing white films are different, eg can have significantly different surface roughness, whiteness and/or gloss values, which can be aesthetically displeasing to the final consumer - the same image applied to the two surfaces of a film can have a different appearance.

We have now devised a polymeric film which reduces or overcomes at least one of the aforementioned problems.

Accordingly, the present invention provides a polymeric film comprising an opaque substrate layer having an optical density greater than 2.0, having on at least one surface thereof a white outer layer.

The invention also provides a method of producing a polymeric film which comprises forming an opaque substrate layer having an optical density greater than 2.0, and applying on at least one surface thereof a white outer layer.

The substrate (or core) layer and/or white outer layer(s) of a polymeric film according to the invention may be formed from any film-forming, polymeric material. Suitable thermoplastics, synthetic, materials include a homopolymer or a copolymer of a 1-olefine, such as ethylene, propylene or butene-1, especially polypropylene, a polyamide, a polycarbonate, and particularly a polyester, such as a synthetic linear polyester which may be obtained by condensing one or more dicarboxylic acids or their lower alkyl (up to 6 carbon atoms) diesters, eg terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. A polyethylene terephthalate or polyethylene naphthalate film is preferred. A polyethylene terephthalate film is particularly preferred, especially such a film which has been biaxially oriented by sequential stretching in two mutually perpendicular directions, typically at a temperature in the range from 70 to 125°C, and preferably heat set, typically at a temperature in the range from 150 to 250°C, for example as described in GB-A-838,708.

The substrate layer and/or white outer layer(s) may also comprise a polyarylether or thio analogue thereof, particularly a polyaryletherketone, polyarylethersulphone, polyaryletheretherketone, polyaryletherethersulphone, or a copolymer or thioanalogue thereof. Examples of these polymers are disclosed in EP-A-1879, EP-A-184458 and US-A-4008203. The substrate layer and/or white outer layer(s) may comprise a poly(arylene sulphide), particularly poly-p-phenylene sulphide or copolymers thereof. Blends of the aforementioned polymers may also be employed.

Suitable thermoset resin substrate layer and/or white outer layer(s) materials include addition-polymerisation resins - such as acrylics, vinyls, bis-maleimides and unsaturated polyesters, formaldehyde condensate resins - such as condensates with urea, melamine or phenols, cyanate resins, functionalised polyesters, polyamides or polyimides.

In a preferred embodiment of the invention the substrate layer and white outer layer(s) of the polymeric film comprise the same polymeric material, preferably polyester, more preferably polyethylene terephthalate or polyethylene naphthalate, and particularly polyethylene terephthalate. It is also preferred that the substrate layer and/or white outer layer(s) comprise crystalline and/or semi-crystalline polymeric material.

The opaque substrate layer and/or white outer layer(s) of a polymeric film according to the invention may be uniaxially oriented, but are preferably biaxially oriented by drawing in two mutually perpendicular directions in the plane of the film to achieve a satisfactory combination of mechanical and physical properties. Formation of the film may be effected by any process known in the art for producing an oriented polymeric, preferably polyester, film, for example a tubular or flat film process.

In a tubular process simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation.

In the preferred flat film process a film-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the polymer. Sequential orientation may be effected by stretching a flat, quenched extrudate firstly in one direction, usually the longitudinal direction, ie the forward direction through the film stretching machine, and then in the transverse direction. Forward stretching of the extrudate is conveniently effected over a set of rotating rolls or between two pairs of nip rolls, transverse stretching then being effected in a stenter apparatus. Stretching is effected to an extent determined by the nature of the film-forming polymer, for example polyethylene terephthalate is usually stretched so that the dimension of the oriented film is from 2 to 5, more preferably 2.5 to 4.5 times its original dimension in the, or each direction of stretching.

A stretched film may be, and preferably is, dimensionally stabilised by heat-setting under dimensional restraint at a temperature above the glass transition temperature of the film-forming polymer but below the melting temperature thereof, to induce crystallisation of the polymer.

Formation of a polymeric film according to the invention may be effected by conventional techniques, for example by laminating together a preformed opaque substrate layer, and preformed white outer layer(s), or by casting the white outer layer(s) onto a preformed opaque substrate layer, or vice versa. Conveniently, however, formation of a composite polymeric film according to the present invention is effected by coextrusion, preferably of two layers (outer/substrate), or more preferably of three layers (outer/substrate/outer), either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multilayer film.

The substrate layer is opaque, by which is meant exhibits a Transmission Optical Density (TOD), measured as described herein, of greater than 2.0, preferably in the range from 2.5 to 10, more preferably 3.0 to 7.0, particularly 3.5 to 6.0, and especially 4.0 to 5.0. The aforementioned TOD ranges are particularly applicable to a 60 µm thick substrate layer. The substrate layer is conveniently rendered opaque by the incorporation therein of an effective amount of an opacifying agent, such as carbon black, or a metallic filler such as aluminium powder. Carbon black is a particularly preferred opacifying agent, especially carbon black known as Furnace type carbon black.

The opaque substrate layer preferably comprises in the range from 0.3% to 10%, more preferably 0.5% to 7%, particularly 1% to 5%, and especially 2% to 4% of opacifying agent, by weight based on the weight of the substrate layer polymer. The opacifying agent, preferably of carbon black, suitably has a mean particle diameter in the range from 0.005 to 10 µm, more preferably 0.01 to 1.5 µm, especially 0.015 to 0.1 µm, and particularly 0.02 to 0.05 µm.

The opacifying agent preferably has a BET surface area, measured as described herein, in the range from 20 to 300, more preferably 50 to 200, and particularly 110 to 160 m²gm⁻¹.

The opaque substrate layer is suitably black, preferably exhibiting a CIE laboratory colour coordinate L* value, measured as herein described, in the range from 10 to 60, more preferably 15 to 50, particularly 20 to 40, and especially 25 to 35.

In a preferred embodiment of the invention, the opaque substrate layer additionally comprises at least one whitening agent, as described below. It is particularly preferred that the opaque substrate layer comprises the same whitening agent(s) present in the white outer layer, ie the opaque substrate and white outer layer comprise at least one common whitening agent. The opaque substrate preferably comprises in the range from 5% to 95%, more preferably 25% to 85%, particularly 50% to 75%, and especially 60% to 70% by weight of whitening agent, relative to the weight of whitening agent present in the white outer layer.

The thickness of the opaque substrate layer is preferably in the range from 0.5 to 150 µm, more preferably 5 to 100 µm, particularly 30 to 80 µm, and especially 50 to 70 µm.

The at least one white outer layer preferably exhibits a Transmission Optical Density (TOD) in the range from 0.4 to 1.75, more preferably 0.5 to 1.2, especially 0.6 to 1.0, and particularly 0.7 to 0.9. The aforementioned TOD ranges are particularly applicable to a 45 µm thick outer layer. The outer layer is conveniently rendered white by incorporation therein of an effective amount of a whitening agent. Suitable whitening agents include a particulate inorganic filler, an incompatible resin filler, or a mixture of two or more such fillers.

Particulate inorganic fillers suitable for generating a white outer layer include conventional inorganic pigments and fillers, and particularly metal or metalloid oxides, such as alumina, silica and titania, and alkaline metal salts, such as the carbonates and sulphates of calcium and barium. Suitable inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the outer layer polymer.

Suitable particulate inorganic fillers may be of the non-voiding or voiding type, ie by voiding is meant comprises a cellular structure containing at least a proportion of discrete, closed cells. Barium sulphate is an example of a filler which results in the formation of voids. Titanium dioxide may be of the voiding or non-voiding type, dependant upon the particular type of titanium dioxide employed. In a preferred embodiment of the invention, the white outer layer comprises titanium dioxide or barium sulphate, or a mixture thereof.

The amount of inorganic filler incorporated into the white outer layer desirably should be not less than 1% nor exceed 50% by weight, based on the weight of the outer layer polymer. Particularly satisfactory levels of whiteness are achieved when the concentration of filler is preferably in the range from 5% to 30%, more preferably 10% to 25%, and particularly 15% to 18% by weight, based on the weight of the outer layer polymer. In one embodiment of the invention, the outer layer comprises a mixture of titanium dioxide and barium sulphate particles, preferably present in a weight ratio in the range from 3 to 0.4:1, more preferably 2 to 0.8:1, and particularly 1.5 to 1:1.

The titanium dioxide filler particles may be of anatase or rutile crystal form. The titanium dioxide particles preferably comprise a major portion of rutile, more preferably at least 60% by weight, particularly at least 80%, and especially approximately 100% by weight of rutile. The particles can be prepared by standard procedures, such as using the chloride process or preferably by the sulphate process.

In one embodiment of the invention the titanium dioxide particles are coated preferably with inorganic oxides such as aluminium, silicon, zinc, magnesium or mixtures thereof. Preferably the coating additionally comprises an organic compound, such as fatty acids and preferably alkanols, suitably having from 8 to 30, preferably from 12 to 24 carbon atoms. Polydiorganosiloxanes or polyorganohydrogensiloxanes, such as polydimethylsiloxane or polymethylhydrogensiloxane are suitable organic compounds.

The coating is suitably applied to the titanium dioxide particles in aqueous suspension. The inorganic oxides are precipitated in aqueous suspension from water-soluble compounds such as sodium aluminate, aluminium sulphate, aluminium hydroxide, aluminium nitrate, silicic acid or sodium silicate.

The individual or primary titanium dioxide particles suitably have a mean crystal size, as determined by electron microscopy, in the range from 0.05 to 0.4 µm, preferably 0.1 to 0.3 µm, and more preferably 0.2 to 0.25 µm. In a preferred embodiment of the invention, the primary titanium dioxide particles aggregate to form clusters or agglomerates comprising a plurality of titanium dioxide particles. The aggregation process of the primary titanium dioxide particles may take place during the actual synthesis of the titanium dioxide and/or during the polymer and/or polymer film making process.

The inorganic filler, suitably aggregated titanium dioxide and/or barium sulphate, preferably has a volume distributed median particle diameter (equivalent spherical diameter corresponding to 50% of the volume of all the particles, read on the cumulative distribution curve relating volume % to the diameter of the particles - often referred to as the "D(v,0.5)" value) in the range from 0.1 to 1.5 µm, more preferably 0.2 to 1.2 µm, particularly 0.4 to 1.0 µm, and especially 0.6 to 0.9 µm.

It is preferred that none of the filler particles incorporated into the outer layer according to this invention should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the particles should not exceed 30 µm. Most preferably the size of 99.9% of the particles should not exceed 20 µm. Preferably at least 90%, more preferably at least 95% of the filler particles, are within the range of the volume distributed median particle diameter ± 0.5 µm, and particularly ± 0.3 µm.

Particle size of the filler particles described herein may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile. The volume distributed median particle diameter of the filler particles is suitably measured using a Malvern Instruments Mastersizer MS 15 Particle Sizer after dispersing the filler in ethylene glycol in a high shear (eg Chemcoll) mixer.

By an "incompatible resin" is meant a resin which either does not melt, or which is substantially immiscible with the polymer, at the highest temperature encountered during extrusion and fabrication of the white outer layer. Such resins include polyamides and olefin polymers, particularly a homo- or co-polymer of a mono-alpha-olefin containing up to 6 carbon atoms in its molecule, for incorporation into polyester films. Preferred materials, particularly for incorporation into a polyethylene terephthalate outer layer, include an olefin polymer, such as a low or high density homopolymer, particularly polyethylene, polypropylene or poly-4-methylpentene-1, an olefin copolymer, particularly an ethylene-propylene copolymer, or a mixture of two or more thereof. Random, block or graft copolymers may be employed.

Dispersibility of the aforementioned olefin polymer in a white outer layer may be inadequate to confer the desired characteristics. Preferably, therefore a dispersing agent is incorporated together with the olefin polymer softening agent. The dispersing agent conveniently comprises a carboxylated polyolefin, particularly a carboxylated polyethylene. Suitable carboxylated polyolefins include those having a Brookfield Viscosity (140°C) in the range 150-100000 cps (preferably 150-50000 cps) and an Acid Number in the range 5-200 mg KOH/g (preferably 5-50 mg KOH/g), the Acid Number being the number of mg of KOH required to neutralise 1 g of polymer.

The amount of dispersing agent may be selected to provide the required degree of dispersibility, but conveniently is in the range from 0.05% to 50%, preferably 0.5% to 20% by weight, based on the weight of the olefin polymer.

The amount of incompatible resin filler present in the white outer layer is preferably within the range from 2% to 30%, more preferably 3% to 20%, particularly 4% to 15%, and especially 5% to 10% by weight, based on the weight of the outer layer polymer.

In one embodiment of the invention, the white outer layer comprises an optical brightener. An optical brightener may be included at any stage of the polymer or polymer film production. Preferably for a polyester outer layer, the optical brightener is added to the glycol, or alternatively by subsequent addition to the polyester prior to the formation of the polyester film, eg by injection during extrusion. The optical brightener is preferably added in amounts in the range from 50 to 1500 ppm, more preferably 200 to 1000 ppm, and especially 400 to 600 ppm by weight, relative to the weight of the outer layer polymer. Suitable optical brighteners include those available commercially under the trade names "Uvitex" MES, "Uvitex" OB, "Leucopur" EGM and "Eastobrite" OB-1.

The components of the opaque substrate layer and/or white outer layer compositions may be mixed together in conventional manner. For example, by mixing with the monomeric reactants from which the polymer is derived, or the components may be mixed with the polymer by tumble or dry blending or by compounding in an extruder, followed by cooling and, usually, comminution into granules or chips. Alternatively, masterbatching technology may be employed.

The external surface of the white outer layer preferably exhibits an 85° gloss value, measured as herein described, in the range from 40% to 70%, more preferably 45% to 65%, particularly 50% to 60%, and especially 52% to 57%.

The external surface of the white outer layer preferably exhibits a root mean square surface roughness (Rq), measured as herein described, in the range from 100 to 1000 nm, more preferably 120 to 700 nm, particularly 130 to 600 nm, and especially 150 to 500 nm.

The thickness of the or each white outer layer is preferably in the range from 10 to 150 µm, more preferably 20 to 100 µm, particularly 30 to 70 µm, and especially 40 to 50 µm.

The polymeric film according to the present invention preferably has the following CIE laboratory colour co-ordinate values for L*, a* and b*, measured as herein described. The L* value is preferably in the range from 90 to 100, more preferably 93 to 99, and particularly 96 to 98. The a* value is preferably in the range from -3 to 2, more preferably -2 to 1, particularly -1 to 0.5, and especially -0.8 to 0.2. The b* value is preferably in the range from -10 to 5, more preferably -5 to 3, particularly -3 to 1, and especially -2 to 0.

The polymeric film preferably exhibits a whiteness index, measured as herein described, in the range from 80 to 120, more preferably 85 to 110, particularly 90 to 105, and especially 95 to 100 units.

The polymeric film preferably exhibits a Transmission Optical Density (TOD), in the range from 2.5 to 10, more preferably 3.0 to 7.0, particularly 3.5 to 6.0, and especially 4.0 to 5.0.

A preferred polymeric film according to the present invention is a multilayer structure comprising, in order, white outer layer/opaque substrate layer/white outer layer. The two white outer layers may be different as regards chemical composition, thickness etc, but are suitably the same, ie a symmetrical structure is preferred. In a particularly preferred embodiment of the invention, the external surface of each of the two white outer layers are similar or substantially the same, by which is meant the difference in the 85° gloss value for the two surfaces is in the range from 0 to 3%, more preferably 0 to 2%, particularly 0 to 1%, and especially 0 to 0.5%. In addition, the difference in the whiteness index for the two surfaces is preferably in the range from 0 to 3, more preferably 0 to 2, particularly 0 to 1, and especially 0 to 0.5 units. Further, the difference in the root mean square surface roughness (Rq) value for the two surfaces is preferably in the range from 0 to 100 nm, more preferably 0 to 50 nm, particularly 0 to 20 nm, and especially 0 to 5 nm.

In one embodiment of the present invention, a polymeric film having two white outer layers comprises an opaque substrate layer comprising a higher concentration of whitening agent, than either, or preferably both of the white outer layers. The concentration of whitening agent present in the substrate layer is preferably greater by an amount in the range from 20% to 400%, more preferably 50% to 300%, particularly 80% to 200%, and especially 100% to 150% by weight, based on the weight of whitening agent present in the outer layers.

The overall thickness of the polymeric film according to the invention is preferably in the range from 12 to 350 µm, more preferably 50 to 250 µm, particularly 100 to 200 µm, and especially 130 to 170 µm. The thickness of the opaque substrate layer is preferably in the range from 5% to 65%, more preferably 10% to 50%, particularly 20% to 45%, and especially 30% to 40% of the combined thickness of the opaque substrate layer and the or each white outer layer(s).

A polymeric film according to the invention may be coated on one or both surfaces with one or more additional coating, ink and/or lacquer layers, for example to form a coated film which exhibits improved properties, such as handleability, antistatic or adhesion promoting, compared with the uncoated film. Suitable coating materials include film-forming polymeric resins such as acrylic resins, copolyesters, styrene copolymers, acrylic copolymers, functionalised polyolefins, polyvinyl alcohol, polyallylamine, cellulosic materials such as nitrocellulose, ethylcellulose and hydroxyethylcellulose. Blends or mixtures of any of the aforementioned polymeric resins may be employed.

A particularly preferred coating layer comprises an acrylic copolymer comprising 35 to 60 mole % of ethyl acrylate/30 to 55 mole % of methyl methacrylate/2 to 20 mole % of methacrylamide, and especially comprising approximate molar proportions 46/46/8% respectively of ethyl acrylate/methyl methacrylate/acrylamide or methacrylamide, the latter polymer being particularly effective when thermoset, for example in the presence of about 25 weight % of a methylated melamine-formaldehyde resin.

Prior to the deposition of a coating medium onto the polymeric film, the exposed surface thereof may, if desired, be subjected to a chemical or physical surface-modifying treatment to improve the bond between that surface and the subsequently applied coating layer. A preferred treatment is corona discharge. Alternatively, the surface of the polymeric film may be pre-treated with an agent known in the art to have a solvent or swelling action thereon. For a polyester film, a suitable material includes a halogenated phenol dissolved in a common organic solvent, eg a solution of p-chloro-m-cresol, 2,4-dichlorophenol, 2,4,5- or 2,4,6-trichlorophenol or 4-chlororesorcinol in acetone or methanol.

The coating medium may be applied to an already oriented polymeric film surface, but application of the coating medium is preferably effected before or during the stretching operation. In particular, it is preferred that the coating medium should be applied to the polymeric film surface between the two stages (longitudinal and transverse) of a biaxial stretching operation.

The layers of a polymeric film according to the invention may, if desired, contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated as appropriate.

The polymeric film described herein can be used in a wide range of applications, particularly where high optical density is required. The polymeric film is especially suitable for use in imaging applications such as photographic imaging, for writing on, in printing applications such as thermal and laser transfer printing, ink-jet printing, photocopying etc. A particularly preferred application is ink-jet printing. Any of the known ink-receiving layers may be applied to the surface of the polymeric film according to the present invention, to form an inkable sheet suitable for ink-jet printing. The aforementioned ink-receiving layers are well known in the art, and are generally hydrophilic, highly absorbent materials and may be formed from a wide range of polymeric materials, such as an acrylic, polyester, cellulosic resin, polyvinyl pyrrolidone, polyvinyl alcohol, or mixtures thereof.

The invention is illustrated by reference to the following drawings in which:
Figure 1 is a schematic sectional elevation, not to scale, of a polymeric film having an opaque substrate layer and a first white outer layer.
Figure 2 is a similar schematic elevation of a film shown in Figure 1, with a second white outer layer on the surface of the opaque substrate layer remote from the first white outer layer.
Figure 3 is a similar schematic elevation of a film shown in Figure 2, with adhesion promoting layers on the surface of each of the two white outer layers.

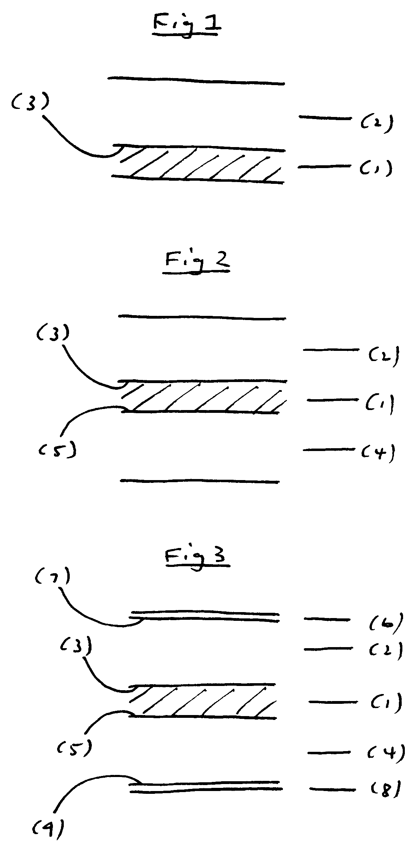

Referring to Figure 1 of the drawings, the polymeric film comprises an opaque substrate layer (1) having a first white outer layer (2) bonded to a first surface (3) of the substrate.

The film of Figure 2 additionally comprises a second white outer layer (4) on the second surface (5) of the substrate layer (1).

The film of Figure 3 additionally comprises a first adhesion promoting layer (6) on the surface (7) of the first white outer layer (2) remote from the substrate (1), and a second adhesion promoting layer (8) on the surface (9) of the second white outer layer (4) remote from the substrate (1).

In this specification the following test methods have been used to determine certain properties of the polymeric film:
(i) Transmission Optical Density (TOD) of the film was measured using a Macbeth Densitometer TR 927 (obtained from Dent and Woods Ltd, Basingstoke, UK) in transmission mode.
(ii) L*, a* and b* colour co-ordinate values (CIE (1976)) and whiteness index were measured using a Colorgard System 2000, Model/45 (manufactured by Pacific Scientific) based on the principles described in ASTM D 313.
(iii) 85° gloss value of the film surface was measured using a Dr Lange Reflectometer REFO 3 (obtained from Dr Bruno Lange, GmbH, Dusseldorf, Germany) according to DIN 67530.
(iv) The film surface root mean square roughness (Rq) was measured using a Wyko Optical Profiler over a field of view of 0.9 x 1.2 mm.

The invention is further illustrated by reference to the following examples.

### Example 1

Separate streams of (i) a substrate layer polymer of polyethylene terephthalate comprising 3% by weight, relative to the weight of polyethylene terephthalate, of Furnace type carbon black having a mean particle diameter of 23 nm and BET specific surface area of 150 m²gm⁻¹ (measured by multi-point nitrogen adsorption using a Micromeritics ASAP 2400 (Micromeritics Limited, Dunstable, UK)), and (ii) two outer layer polymers of polyethylene terephthalate comprising 15% by weight, relative to the weight of polyethylene terephthalate, of rutile titanium dioxide having a volume distributed median particle diameter of 0.7 µm, were supplied from separate extruders to a single channel coextrusion assembly. The polymer layers were extruded through a film-forming die onto a water cooled rotating, quenching drum to yield an amorphous cast composite extrudate. The cast extrudate was heated to a temperature of about 80°C and then stretched longitudinally at a forward draw ratio of 2.9:1. The film was passed into a stenter oven, where the film was dried and stretched in the sideways direction to approximately 3.4 times its original dimensions. The biaxially stretched polymeric film was heat set at a temperature of about 220°C. Final film thickness was 100 µm. The opaque substrate layer was 15 µm thick, and the two white outer layers were both 42.5 µm thick.

The polymeric film was subjected to the test procedures described herein and exhibited the following properties:
(i) Transmission Optical Density (TOD) = 4.1.
(ii) L* = 94.06 (difference between the two white outer layer surfaces = 0.3).
   a* = -1.65.
   b* = -0.43.
   Whiteness Index = 87.76 units (difference between the two white outer layer surfaces = 0.91 units).
(iii) 85° gloss value = 53.0% (difference between the two white outer layer surfaces = 0.1%).
(iv) Root mean square surface roughness (Rq) = 175 nm (difference between the two white outer layer surfaces = 7 nm).

The film was suitable for imaging on both surfaces thereof. The film was written on using a black marker pen, and the writing could not be seen through the other side of the film even when the film was held up to the window or to a bright artificial light, eg on an overhead projector.

### Example 2

The procedure of Example 1 was repeated except that the substrate layer comprised 2% of carbon black, and final film thickness was 175 µm, the opaque substrate layer being 18 µm thick, and the two white outer layers being both 78.5 µm thick.

The polymeric film was subjected to the test procedures described herein and exhibited the following properties:
(i) Transmission Optical Density (TOD) = 4.9.
(ii) L* = 96.38 (difference between the two white outer layer surfaces = 0.02).
   a* = -1.50.
   b* = -1.96.
   Whiteness Index = 80.02 units (difference between the two white outer layer surfaces = 0.97 units).
(iii) 85° gloss value = 53.1% (difference between the two white outer layer surfaces = 0.1%).

The film was also suitable for imaging on both surfaces thereof.

### Example 3

The procedure of Example 1 was repeated except that the substrate layer comprised 2% of carbon black, the white outer layers comprised 18% of barium sulphate having a volume distributed median particle diameter of 0.8 µm. The opaque substrate layer was 10 µm thick, and the two white outer layers were both 45 µm thick.

The polymeric film was subjected to the test procedures described herein and exhibited the following properties:
(i) Transmission Optical Density (TOD) = 2.6.
(ii) L* = 93.61 (difference between the two white outer layer surfaces = 0.07).
   a* = -0.27.
   b* = -3.23.
   Whiteness Index = 101.96 units (difference between the two white outer layer surfaces = 0.04 units).
(iii) 85° gloss value = 52.15% (difference between the two white outer layer surfaces = 1.1%).
(iv) Root mean square surface roughness (Rq) = 335 nm (difference between the two white outer layer surfaces = 70 nm).

The film was also suitable for imaging on both surfaces thereof.

## Claims

1. A polymeric film comprising an opaque substrate layer having an optical density greater than 2.0, having on at least one surface thereof a white outer layer.

2. A film according to claim 1 wherein the substrate layer comprises in the range from 0.3% to 10% by weight of opacifying agent, based on the weight of the substrate layer polymer.

3. A film according to claim 2 wherein the opacifying agent comprises carbon black.

4. A film according to any one of the preceding claims wherein the substrate layer comprises a whitening agent.

5. A film according to any one of the preceding claims wherein the outer layer comprises in the range from 5% to 30% by weight of a whitening agent, based on the weight of the outer layer polymer.

6. A film according to either one of claims 4 and 5 wherein the same whitening agent is present in both the substrate layer and the outer layer.

7. A film according to any one of the preceding claims wherein the film comprises two white outer layers.

8. A film according to claim 7 wherein the difference in the whiteness index for the two outer layers is in the range from 0 to 3%.

9. A film according to any one of the preceding claims additionally comprising an ink-receptive layer suitable for ink-jet printing, on the surface of the outer layer.

10. A method of producing a polymeric film which comprises forming an opaque substrate layer having an optical density greater than 2.0, and applying on at least one surface thereof a white outer layer.
